# EUROPÄISCHE PATENTSCHRIFT

(11) **EP 1 350 954 B1**
(45) Veröffentlichungstag und Bekanntmachung des Hinweises auf die Patenterteilung: **24.05.2006**
(21) Anmeldenummer: 03006691.4
(22) Anmeldetag: 26.03.2003
(51) Int. Cl.: F03G 7/06

(54) **Stellvorrichtung mit Formgedächtniselement**
Shape memory alloy actuator
Actionneur en alliage à memoire de forme

(30) Priorität: 30.03.2002 DE 10214398
(43) Veröffentlichungstag der Anmeldung: 08.10.2003
(73) Patentinhaber: Kiekert Aktiengesellschaft, 42579 Heiligenhaus (DE)
(72) Erfinder: Hild, Sven, 58089 Hagen (DE); Jendritza, Daniel, Dr., 47802 Krefeld (DE); Platzköster, Andreas, 46514 Schermbeck (DE)

(56) Entgegenhaltungen:
- DE-A- 19 738 494
- US-A- 4 930 494
- US-A- 5 685 148
- US-A- 5 763 979

## Beschreibung

Die Erfindung betrifft eine Stellvorrichtung für ein Kraftfahrzeug, z. B. zur Ver-/Entriegelung von Kraftfahrzeug-Türverschlüssen, mit einem als Aktuator ausgebildeten Formgedächtniselement, welches in Abhängigkeit von zumindest einer Einflussgröße seine Gestalt reversibel ändert, und mit einer elektronischen Steuereinheit zur Beaufschlagung des Aktuators.

Eine solche Stellvorrichtung ist aus dem Bereich der Medizin bei der Anwendung in einem Endoskop in der US 4, 930, 494 beschrieben. Neben den speziellen Anforderungen, die an die Medizintechnik gestellt werden ist für die beschriebene Stellvorrichtung entsprechend der Spezifikation der Anwendung eine Anpassung an sich ändernde Außentemperaturen nicht notwendig.
In der US 5, 685, 148 wird eine Stellvorrichtung unter Nutzung des Shape-Memory-Effektes beschrieben, die auch Aufheizen und Abkühlen auf vorbestimmte Temperaturen zwei Endlagen zur Betätigung eines Hebels einnehmen kann. Nachteilig bei dieser Lösung ist, dass Temperaturveränderungen in der Umgebung der Stellvorrichtung während der Betätigung die Wirkungsweise negativ beeinflussen können.

Eine weitere Stellvorrichtung wird im Rahmen der DE 197 38 494 beschrieben. Dort geht es um einen Antriebsmotor, insbesondere zum Ausrichten eines Scheinwerfers für ein Kraftfahrzeug. Als Aktuator kommt ein durch Wärmezufuhr verformbares Formgedächtniselement aus einer Formgeddchtnislegierung zum Einsatz. Das Formgedächtniselement ist in einzelne Elementabschnitte unterteilt, die einzeln oder zu mehreren auf die Umwandlungstemperatur der Formgedächtnislegierung (üblicherweise im Bereich von ca. 80° C bis 150° C) aufheizbar sind. Das kann durch ihnen zugeordnete Heizmittel, beispielsweise PTC-Elemente (PTC = positive temperature coefficient) geschehen. Auch wird der Einsatz einer elektronischen Schaltung angesprochen, welche es ermöglicht, einzelne Elementabschnitte beliebig herauszugreifen und mit Strom zu beaufschlagen.

Die beim Stand der Technik eingesetzten PTC-Elemente, wie sie auch in der DE 37 35 216 A1 sowie der DIN 44080/10.83 angesprochen werden, betreffen bekanntermaßen temperaturabhängige Widerstände, deren Widerstandswerte bei ansteigender Temperatur annähernd sprungförmig ansteigen, sobald eine bestimmte Temperatur überschritten wird. Im Stand der Technik werden die betreffenden PTC-Elemente üblicherweise dem Formgedächtniselement vorgeschaltet. Dadurch will man eine zu hohe Leistungseinkopplung in das Formgedächtniselement verhindern. Denn bei durch Wärmezufuhr verformbaren Formgedächtnislegierungen kann eine Überhitzung dazu führen, dass die Formgedächtnis-Eigenschaften verloren gehen. Dem trägt das PTC-Element insofern Rechnung, als sein Widerstand mit zunehmender Erwärmung ansteigt und folglich die das Formgedächtniselement erreichende Leistung sinkt.

Eine einwandfreie Funktionsweise setzt jedoch voraus, dass die PTC-Charakteristik und die Temperaturabhängigkeit der Formgedächtnislegierung genau aneinander angepasst sind und keinen zeitbedingten Änderungen unterliegen. Eine solche Abstimmung ist schwierig und in der Praxis kaum zu realisieren. Hinzu kommt, dass bei mehrmaligem Betätigen die sich aufbauende innere Wärme des PTC-Gliedes die Leistungseinkopplung in das Formgedächtniselement hemmt, so dass seine Erwärmung mehr Zeit als zuvor in Anspruch nimmt. Das heißt, es ist je nach Ursprungszustand der gesamten Stellvorrichtung mit unterschiedlichen Betätigungszeiten zu rechnen. Hieraus resultieren Komforteinbußen, die einer Anwendung im Kfz-Bereich zumindest entgegenstehen, wenn sie sie nicht schon von vornherein ausschließen. - Hier will die Erfindung insgesamt Abhilfe schaffen.

Der Erfindung liegt das technische Problem zugrunde, eine gattungsgemäße Stellvorrichtung so weiter zu entwickeln, dass ein etwaiger Verlust der Formgedächtnis-Eigenschaften des Aktuators auf jeden Fall verhindert wird und die Stellvorrichtung insgesamt praktisch verzögerungsfrei arbeitet - auch nach dem Durchlaufen mehrmaliger Zyklen.

Zur Lösung dieser Aufgabenstellung ist eine gattungsgemäße Stellvorrichtung erfindungsgemäß dadurch gekennzeichnet, dass die Steuereinheit das Formgedächtniselement so beaufschlagt, dass die Einflussgröße einen vorgegebenen Wert annimmt. Dieser Wert mag innerhalb eines bestimmten, ebenfalls vorgegebenen Bereiches liegen. Dadurch, dass die Einflussgröße mit Hilfe der Steuereinheit innerhalb des vorgegebenen Bereiches gehalten wird, kann sichergestellt werden, dass das Formgedächtniselement seine Formgedächtnis-Eigenschaften behält. Denn bei diesem Formgedächtniselement handelt es sich üblicherweise um eine Formgedächtnislegierung, eine sogenannte Shape-Memory-Alloy (SMA).

Grundsätzlich sind natürlich auch piezoelektrische Wandler als Formgedächtniselemente denkbar, also solche Aktuatoren, die auf ein angelegtes elektrisches Feld bzw. Änderungen desselben mit einer Form- bzw. Längenänderung reagieren.

In der Regel kommt jedoch als Formgedächtniselement eine Formgedächtnislegierung zum Einsatz, die unter Wärmezufuhr ihre Gestalt ändert. Das lässt sich im Kern darauf zurückführen, dass eine solche Formgedächtnislegierung üblicherweise über zwei mögliche Kristallstrukturen verfügt. Der mit der Formänderung verbundene Effekt beruht dabei auf einer Phasenumwandlung zwischen diesen beiden Kristallstrukturen.

In der Regel liegt bei tiefer Temperatur eine Martensit-Kristallstruktur vor, während bei hohen Temperaturen Austenit-Gestalt angenommen wird. Man unterscheidet grundätzlich zwischen dem sogenannten Einweg- und Zweiwegeffekt, die durch variierende Werkstoffbehandlung erzeugt werden. Beim sogenannten Einwegeffekt wird lediglich einmal die ursprüngliche Hochtemperaturform beim Erwärmen einer bei tiefer Temperatur bleibend geformten Probe wieder eingenommen.

Dagegen beruht der Zweiwegeffekt darauf, dass sich entsprechend vorbehandelte Formgedächtniselemente sowohl an eine Hochtemperatur- als auch an eine Niedertemperaturform erinnern. Diese Formgedächtniselemente mit Zweiwegeffekt spielen vorliegend die größte Rolle, weil der Aktuator zumindest zwischen zwei Positionen (Hoch- und Niedertemperaturform) hin- und herbewegt werden soll. - Grundsätzlich ist es natürlich auch denkbar, das Formgedächtniselement so auszulegen, dass sogar noch mehr als zwei Formen - je nach Temperatur - eingenommen werden, beispielsweise indem verschiedene Formgedächtnislegierungen kombiniert werden.

Jedenfalls lässt sich der beschriebene Zweiwegeffekt grundsätzlich über hohe Zyklenzahlen erhalten, wobei die Weg-Temperatur-Kennlinie eines Formgedächtniselementes mit Zweiwegeffekt eine Hystereseform aufweist. Selbstverständlich lässt sich die Größe dieser Hysterese durch geeignete Maßnahmen, beispielsweise Änderung der Legierungszusammensetzung, beeinflussen.

Für die Beibehaltung der Formgedächtniseigenschaften ist es nun erforderlich, dass die Temperaturen in dem Formgedächtniselement so eingestellt werden, dass sie im Wesentlichen im durch die Hysterese vorgegebenen Bereich liegen. Denn insbesondere zu hohe Temperaturen, welche den der Hochtemperaturform entsprechenden Wert weit überschreiten, können dazu führen, dass die in diesem Fall eingenommene Austenit-Struktur ganz oder teilweise irreversibel zerstört wird, so dass die Lebensdauer des Formgedächtniselementes zumindest eingeschränkt ist.

Damit nun die entsprechenden Temperaturen in diesem gewünschten Bereich bleiben, ist erfindungsgemäß die Steuereinheit so ausgelegt, dass das Formgedächtniselement entsprechend beaufschlagt wird.

Dabei kann so vorgegangen werden, dass die Steuereinheit den Wert der Einflussgröße in Abhängigkeit von die Einflussgröße beeinflussenden äußeren Parametern wie herrschende Umgebungstemperatur, anliegende elektrische Spannung, Stärke des Magnetfeldes etc. vorgibt. Hier geht die Erfindung von der Erkenntnis aus, dass die Wärmezufuhr bei einer Formgedächtnislegierung beispielsweise zum Erreichen der Hochtemperaturform bei erhöhter Außentemperatur naturgemäß geringer sein kann, als wenn die Außentemperatur Gefriergrade einnimmt.

Ebenso wirkt sich natürlich auch die anliegende Spannung aus. Bei hoher Bordspannung kann man mit kleinen Strömen bzw. einer geringen Zeit der Leistungsbeaufschlagung arbeiten, während eine niedrige Bordspannung an dieser Stelle einen größeren Strom bzw. eine längerfristige Leistungsbeaufschlagung der Formgedächtnislegierung erfordert.

Die vorgenannten einzelnen oder mehreren äußeren Parameter lassen sich mittels eines oder mehrerer an die Steuereinheit angeschlossenen Sensoren erfassen. Dadurch werden Messwerte erzeugt. Diese Messwerte gelangen in die Steuereinheit, welche in Abhängigkeit hiervon einen Wert für die Einflussgröße im Sinne einer Steuerung oder Regelung vorgibt. Das geschieht dergestalt, dass dieser Wert der Einflussgröße, welcher von den gemessenen äußeren Parametern beeinflusst wird, innerhalb des vorgegebenen Bereiches liegt. Die Steuereinheit kalkuliert also anhand der gemessenen äußeren Parameter die erforderliche Wärmezufuhr (elektrische Leistung) zur Beaufschlagung des Formgedächtniselementes, welche notwendig ist, um die Hochtemperaturform sicher einstellen zu können. Beim Wegfall der Wärmezufuhr geht das Formgedächtniselement natürlich wieder in seine Niedrigtemperaturform über.
Bei der das Formgedächtniselement beeinflussenden Einflussgröße handelt es sich in der Regel um die zugeführte elektrische Leistung. Diese wird von der Steuereinheit je nach herrschender und gemessener Außentemperatur als äußerer Parameter modifiziert. Ebenso sorgt die am Formgedächtniselement anliegende Spannung als äußerer Parameter für eine entsprechende Modifikation der seitens der Steuereinheit zugeführten elektrischen Leistung. Schließlich nimmt das Formgedächtniselement - wie bereits beschrieben - wenigstens zwei verschiedene Kristallstrukturen in Abhängigkeit von der Einflussgröße ein. Dabei korrespondiert die Ausbildung der unterschiedlichen Phasen jeweils zu Eckwerten der Einflussgröße. Diese Eckwerte der Einflussgröße definieren die minimale Reichweite des vorgegebenen Bereiches, innerhalb dessen die Steuereinheit den Wert der Einflussgröße hält.

Im Ergebnis wird eine Stellvorrichtung zur Verfügung gestellt, die mit einem als Aktuator ausgebildeten Formgedächtniselement ausgerüstet ist, bei dem es sich regelmäßig um eine Formgedächtnislegierung handelt, die auf unterschiedliche Wärmezufuhr mit einer Formänderung reagiert. Typische Legierungen, die sich für die betreffende Anwendung eignen, sind Nickel-Titan (NiTi), Nickel-Titan-Kupfer (NiTiCu), Kupfer-Zink-Aluminium (Cu-Zn-Al) und Kupfer-Aluminium-Nickel (Cu-Al-Ni).

Dadurch, dass die erfindungsgemäße Steuereinheit das Formgedachtniselement bzw. die die Wärmezufuhr darstellende Einflussgröße wertmäßig vorgibt, wird gewährleistet, dass das Formgedächtniselement unbeschadet eine große Anzahl von Zyklen vollführen kann. Denn durch Übertemperaturen verursachte Kristallumwandlungen innerhalb der Formgedächtnislegierung werden hierdurch gleichsam unterdrückt.

Im Folgenden wird die Erfindung anhand einer lediglich ein Ausführungsbeispiel darstellenden Zeichnung näher erläutert; es zeigen:
- **Fig. 1**: eine typische Weg-Temperatur-Kennlinie eines Formgedächtniselementes mit Zweiwegeffekt,
- **Fig. 2**: die erfindungsgemäß eingesetzte Steuereinheit schematisch,
- **Fig. 3**: ein detaillierteres Bild des Gegenstandes nach Fig. 2 und
- **Fig. 4**: die Leistungsansteuerung des Formgedächtniselementes schematisch.

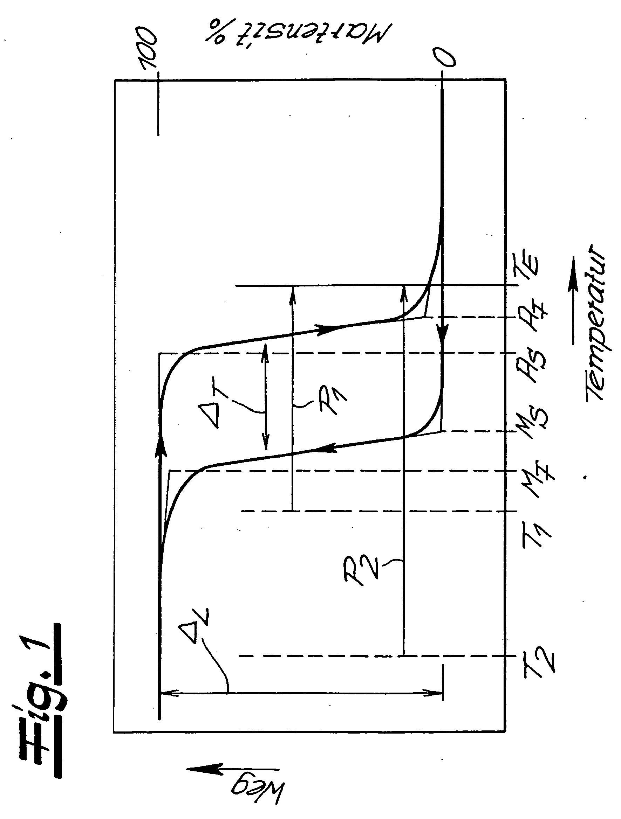

In Fig. 1 ist eine Weg-Temperatur-Kennlinie einer Formgedächtnislegierung mit Zweiwegeffekt dargestellt. Man erkennt, dass bei tiefen Temperaturen eine mehr oder minder vollständige Martensit-Struktur vorliegt, während hohe Temperaturen zu einer Austenit-Kristallform korrespondieren. Dann liegt der auf der rechten X-Achse angegebene Martensit-Anteil bei 0 %. Die jeweiligen Phasenübergänge prägen sich innerhalb bestimmter Temperaturbereiche aus, die einerseits zwischen M_{F} (Endtemperatur für die Martensit-Phase) und M_{S} (Starttemperatur für die Martensit-Phase) und A_{F} (Endtemperatur für die Austenit-Phase) sowie A_{S} (Starttemperatur für die Austenit-Phase) liegen. Das ist grundsätzlich bekannt (vgl. nur beispielhaft die Literaturstelle "Der Konstrukteur", 1-2/84 Arbeitsnummer 325). Aufgrund der dargestellten und bekannten Temperaturcharakteristik der üblicherweise eingesetzten Formgedächtnislegierung stellt sich eine Hysterese ein, die zu einem Temperaturintervall ΔT korrespondiert (vgl. Fig. 1).

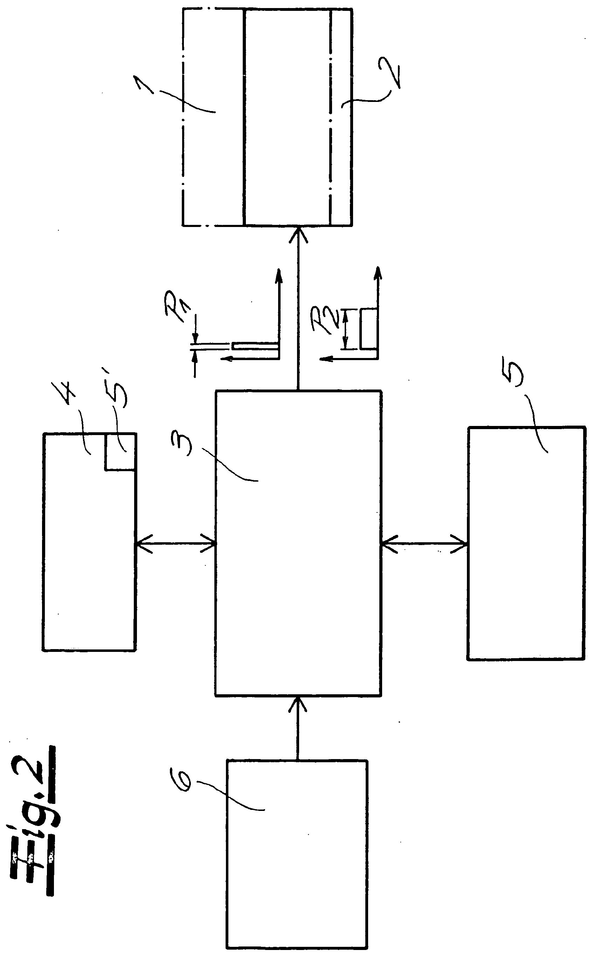

Im Rahmen der Fig. 2 ist nun die erfindungsgemäße Stellvorrichtung schematisch gezeigt. Sie dient vorliegend zur Ver-/Entriegelung eines angedeuteten Kraftfahrzeug-Türverschlusses 1, wenngleich natürlich auch völlig andere Anwendungsgebiete denkbar sind und umfasst werden. So z. B. eine Scheinwerferverstellung, wie sie im Rahmen der gattungsbildenden DE 197 38 494 A1 beschrieben ist oder auch eine Zentralverriegelungsfunktion, eine Kindersicherung, elektrische Öffnungshilfe etc.. Auch nicht automobile Einsätze sind denkbar.

Um nun den Kraftfahrzeug-Türverschluss 1 ver- und entriegeln zu können, ist ein Aktuator 2 vorgesehen, bei dem es sich um ein Formgedächtniselement 2 handelt. Das Formgedächtniselement 2 verfügt über einen (spiralförmigen) Draht aus einer Formgedächtnislegierung, welcher seine Länge in Abhängigkeit von seiner Temperatur ändert. In der Regel nimmt die Spirale bzw. der Draht einen Ausgangszustand bei Normaltemperatur ein, wie er in Fig. 1 im linken Teil dargestellt ist. Die Kristallstruktur ist martensitisch. Erfolgt dagegen eine Erwärmung über die Temperatur A_{S} hinaus, so geht die Formgedächtnislegierung in den austenitischen Zustand über und der Draht erfährt eine Verlängerung um den in Fig. 1 angedeuteten Betrag ΔL. Diese Längenänderung ΔL mag nun innerhalb des Kraftfahrzeug-Türverschlusses 1 zum Ver-/Entriegeln (gegebenenfalls in Verbindung mit einem zusätzlichen Hebelwerk) genutzt werden - je nach Auslegung.

Sobald die Wärmezufuhr für das Formgedächtniselement 2 nicht mehr vorhanden ist, zieht es sich in den Ausgangszustand zusammen, weil nun wieder die Martensit-Phase erreicht wird. Das Formgedächtniselement 2 ändert also in Abhängigkeit von der Wärmezufuhr als Einflussgröße seine Gestalt, und zwar reversibel.

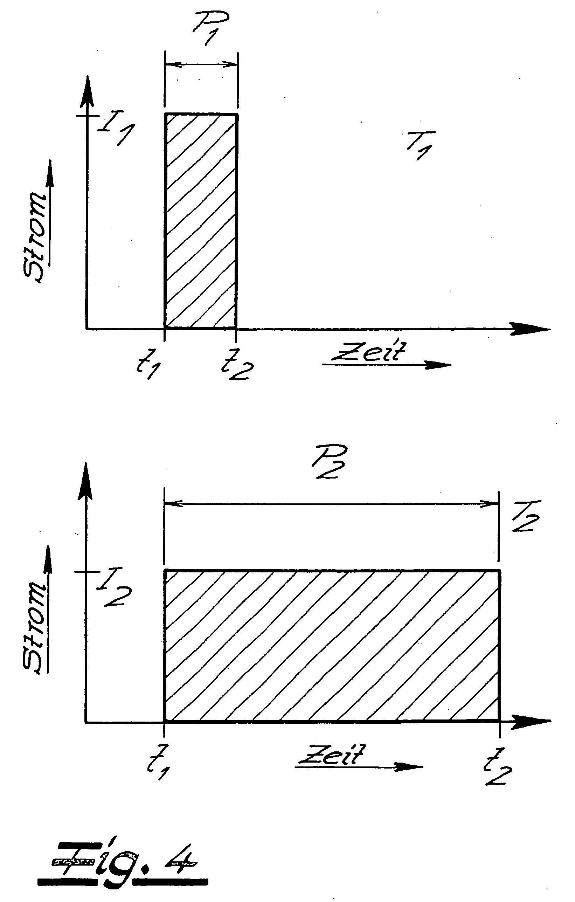

Um diese Gestaltänderungen vornehmen zu können, ist eine elektronische Steuereinheit 3 mit einem Mikrocontroller 9 vorgesehen, welche das Formgedächtniselement 2 beaufschlagt. Das geschieht in der Weise, dass die Steuereinheit 3 das Formgedächtniselement 2 so mit elektrischer Leistung P als Einflussgröße versorgt, dass diese (die Einflussgröße) einen bestimmten Wert (innerhalb eines vorgegebenen Bereiches P₁, P₂) einnimmt (vgl. Fig. 1). Das ist zusätzlich durch die jeweils dargestellten Strom-/Zeitverläufe angedeutet, die im Rahmen der Fig. 4 noch genauer erläutert werden.

Jedenfalls sorgt die Steuereinheit 3 dafür, dass das Formgedächtniselement 2 für eine bestimmte Zeit mit einem vorgegebenen Strom beaufschlagt wird. Die hieraus resultierende Leistungseinkopplung bzw. sich einstellende Leistung P korrespondiert also zu einer Wärmezufuhr für das Formgedächtniselement 2, die dadurch ebenfalls von der Steuereinheit 3 vorgegeben und innerhalb eines vorgegebenen Wertebereiches gehalten wird. Dabei hängen Leistung P und Wärmezufuhr direkt (linear) voreinander ab, so dass von einer einzigen Einflussgröße (Leistung bzw. Wärmezufuhr) gesprochen werden kann.

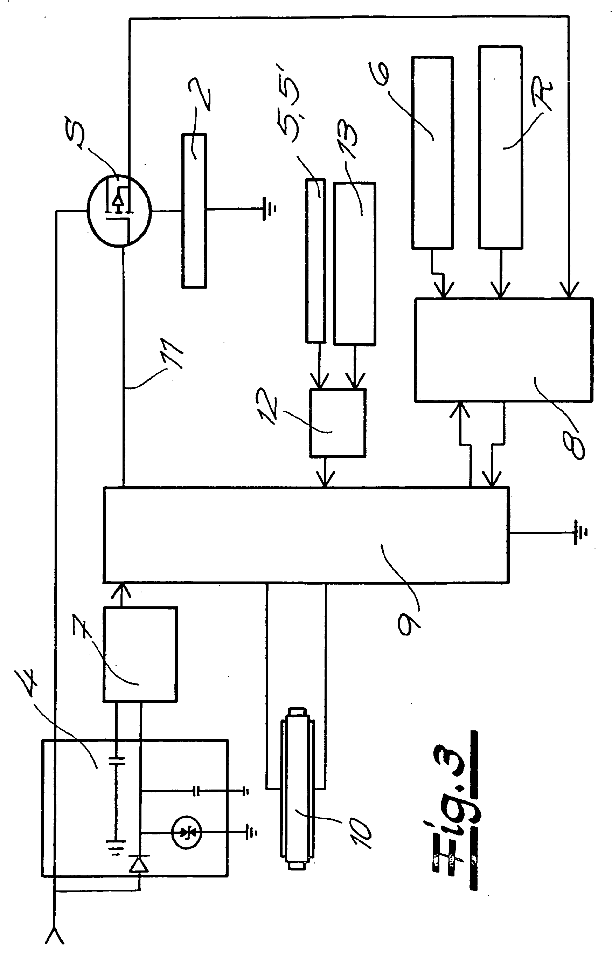

Variationen des Stromes und/oder der Zeitdauer t der Strombeaufschlagung und damit der Leistungseinkopplung (Wärmezufuhr) als Einflussgröße werden nun in Abhängigkeit von die Einflussgröße beeinflussenden äußeren Parametern vorgenommen. Zu diesen äußeren Parametern gehören im Rahmen des Ausführungsbeispiels insbesondere die herrschende Umgebungstemperatur T₁, T₂ sowie die anliegende elektrische Spannung U, welche von einer Spannungsquelle 4 zur Verfügung gestellt wird. Zur Messung der herrschenden Umgebungstemperatur T₁, T₂ dient ein Sensor 5, bei dem es sich um einen bei einem Kraftfahrzeug zumeist ohnehin vorhandenen Außentemperaturfühler handelt. Auch die Spannungsquelle 4 verfügt über einen entsprechenden Sensor 5' zur Spannungsmessung bzw. ist ausweislich der Fig. 3 mit einem Spannungsregulator 7 ausgerüstet, welcher die Spannung U fest vorgibt.

Entsprechende Messwerte für die Spannung U und die Temperatur T₁, T₂ werden an die Steuereinheit 3 übergeben. Diese leitet nun aufgrund dieser Eingangsdaten die Einflussgröße P zur Beaufschlagung des Formgedächtniselementes 2 ab. Dabei stellt die Einflussgröße P sicher, dass beispielsweise bei einer gewünschten Längenänderung ΔL auch einwandfrei die austenitische Phase im rechten Teil der Fig. 1 erreicht aber dennoch die Temperatur A_{F} im Formgedächtniselement 2 nicht wesentlich überschritten wird.

Die Steuereinheit 3 nimmt also aufgrund der gewonnenen Messwerte für T₁, T₂ bzw. U eine Steuerung oder Regelung vor, und zwar dergestalt, dass die Einflussgröße P (also die an das Formgedächtniselement 2 abgegebene Leistung P und damit die Wärmezufuhr) einen vorgegebenen Wert einnimmt und regelmäßig innerhalb des in der Fig. 2 schematisch angedeuteten Bereiches P₁ bzw. P₂ liegt. Geht man von einer mehr oder minder konstanten Spannung U aus, so repräsentiert der zugehörige rechteckförmige Stromimpuls gemäß Fig. 4 zwischen den Zeitpunkten t₁ und t₂ die an das Formgedächtniselement 2 abgegebene Leistung P = U x I(t) und folglich die Wärmezufuhr als Einflussgröße. In Abhängigkeit von der jeweils schraffiert dargestellten Leistungszufuhr stellt sich natürlich dann auch die Temperatur T des Formgedächtniselementes 2 und somit die jeweilige Phase entsprechend Fig. 1 ein.

Geht man davon aus, dass jede Temperaturänderung ΔT in der Fig. 1 zu einer bestimmten dahinter stehenden elektrischen Leistung P korrespondiert, also wenn man so will einem Teil der in Fig. 4 dargestellten Flächen, so wird deutlich, dass die Steuereinheit 3 je nach Startpunkt bzw. Außentemperatur T₁ bzw. T₂ (vgl. Fig. 1) eine mehr oder minder große elektrische Leistung P an das Formgedächtniselement 2 abgeben muss, damit die Temperatur A_{f} sicher erreicht wird. Das heißt, die jeweiligen Bereiche P₁ und P₂ sind so bemessen, dass beginnend mit der zugehörigen Temperatur T₁ bzw. T₂ eine bestimmte Endtemperatur T_{E} oberhalb der Endtemperatur für die austenitische Phase A_{f} sicher erreicht wird.

In der Fig. 3 ist der Aufbau der elektronischen Steuereinheit nebst Peripherie noch einmal im Detail dargestellt. Man erkennt einen Schalter 6 an einem Türaußengriff bzw. Türinnengriff eines Kraftfahrzeuges, welcher die beschriebenen Längenänderungen ΔL des Formgedächtniselementes 2 initiiert. Dazu wird das zugehörige Schaltersignal von der Steuereinheit 3 ausgewertet. Ebenso mag die Steuereinheit 3 auf eine Fernbedieneinheit R (remote control) reagieren. Beide Signale werden von einer Ein-/Ausgabeeinheit 8 verarbeitet und an den Mikrocontroller 9 übergeben, welcher von einem Oszillator 10 getaktet wird. Ein Spannungsregulator 7 sorgt dafür, dass der Mikrocontroller 9 mit konstanter Versorgungsspannung von der Spannungsquelle 4 versorgt wird.

An die Spannungsquelle 4 ist über einen Schalter, vorliegend einen FET-Transistor S, auch das Formgedächtniselement 2 als Aktuator 2 angeschlossen. Über eine Verbindungsleitung 11 zum FET-Transistor bzw. Schalter S stellt der Mikrocontroller 9 sicher, dass das Formgedächtniselement 2 nur innerhalb der insbesondere in der Fig. 4 dargestellten Zeiträume zwischen t₁ und t₂ mit Strom I(t) versorgt wird. Zuvor sind jedoch die Spannung U der Spannungsquelle 4 und auch die Außentemperatur T₁, T₂ durch entsprechend angedeutete Sensoren 5, 5' erfasst und über einen A/D-Wandler 12 an den Mikrocontroller 9 übergeben worden. Gleiches gilt für einen weiteren Sensor 13, welcher den Abschluss der Stellbewegung der beschriebenen Stellvorrichtung bzw. die Stellung einer Drehfalle erkennen mag.

Der Spannungsregulator 7, der Oszillator 10, der A/D-Wandler 12, die Ein-/Ausgabeeinheit 8 und der Mikrocontroller 9 formen in Verbindung mit dem Schalter S insgesamt die Steuereinheit 3. Die Funktionsweise ist wie folgt.

Ein Signal des Schalters 6 oder der Fernbedieneinheit R führt beispielsweise zum Entriegeln einer Drehfalle eines Kraftfahrzeugtürverschlusses zunächst einmal dazu, dass der Sensor 13 an der Drehfalle abgefragt wird. Ist diese geschlossen, so kann eine entsprechende Entriegelungsroutine durchlaufen werden. Das hat zur Folge, dass mit Hilfe der Sensoren 5, 5' die Umgebungstemperatur T₁, T₂ sowie die anliegende Spannung U am Formgedächtniselement 2 ermittelt werden. Je nach dem hieraus abgeleiteten Startwert (beispielsweise T₁ oder T₂) errechnet der Mikrocontroller 9 bzw. die Steuereinheit 3 die erforderliche Wärmezufuhr bzw. Leistungseinkopplung P₁, P₂ um die Endtemperatur T_{E} erreichen zu können (vgl. Fig. 1).

Dabei trägt die Steuereinheit 3 bzw. der Mikrocontroller 9 der Tatsache Rechnung, dass bei vorgegebener Spannung U je nach herrschender Umgebungstemperatur T₁ bzw. T₂ unterschiedliche Ströme fließen. Das kommt in der Fig. 4 zum Ausdruck. So korrespondiert die niedrige Anfangs- bzw. Umgebungstemperatur T₁ zu einem relativ hohen Strom I₁, weil das Formgedächtniselement 2 "kalt" ist und dem Strom einen geringen Widerstand entgegensetzt. Dagegen nimmt der Widerstand bei zunehmender Temperatur zu, was sich in dem verringerten Strom I₂ ausdrückt, falls bei der höheren Temperatur T₂ gestartet wird. Diese temperaturabhängigen Stromwerte I₁ und I₂ sind bekannt und lassen sich im Mikrocontroller 9 bzw. einem dortigen Speicher hinterlegen und hängen von der Charakteristik des Formgedächtniselementes 2 ab.

Je nach zu erwartendem Strom I₁ bzw. I₂ errechnet die Steuereinheit 3 bzw. der Mikrocontroller 9 unter Berücksichtigung der ebenfalls vorgegebenen Spannung U nun die erforderliche einzukoppelnde Leistung P (schraffierte Fläche in Fig. 4), um sicher die Endtemperatur T_{E} nach der Fig. 1 erreichen zu können. Die Steuereinheit 3 bzw. der Mikrocontroller 9 gibt also je nach den äußeren Parametern T₁, T₂, U die Einflussgröße P bzw. deren Wert vor. Dieser Wert stellt sicher, dass das Formgedächtniselement 2 nach der Beaufschlagung die Temperatur T_{E} erreicht hat. Als Folge hiervon wird im Rahmen des Ausführungsbeispiels mit Hilfe des nunmehr um den Betrag ΔL ausgelenkten Formgedächtniselementes 2 eine Sperrklinke entriegelt, welche die mittels des Sensors 13 abgefragte Drehfalle öffnet. Der Sensor 13 liefert am Ende dieses Vorganges ein Entriegelungssignal an den Mikrocontroller 9 über den Abschluss der Entriegelung.

Die jeweiligen Leistungswerte P₁, P₂ definieren im Rahmen des Ausführungsbeispiels den Bereich, innerhalb dessen die einzukoppelnde Leistung P gehalten werden muss. Denn die Leistungswerte P₁, P₂ korrespondieren zu Extremwerten der äußeren Parameter T₁, T₂ und U.

## Patentansprüche

1. Stellvorrichtung für ein Kraftfahrzeug, z. B. zur Ver-/Entriegelung von Kraftfährzeug-Torverschlüssen (1), mit einem als Aktuator (2) ausgebildeten Formgedächtniselement (2), welches in Abhängigkeit von zumindest einer Einflussgröße (P) seine Gestalt reversibel ändert, und mit einer elektronischen Steuereinheit (3) zur Beaufschlagung des Aktuators (2), **dadurch gekennzeichnet, dass** die Steuereinheit (3) das Formgedächtniselement (2) so beaufschlagt, dass die Einflussgröße (P) einen vorgegebenen Wert annimmt und die dem Formgedächtniselement (2) zugeführte elektrische Leistung (P) seitens der Steuereinheit (3) je nach herrschender und gemessener Außentemperatur (T₁, T₂) als äußerer Parameter modifiziert wird.

2. Stellvorrichtung nach Anspruch 1, **dadurch gekennzeichnet, dass** die Steuereinheit (3) den Wert der Einflussgröße (P) in Abhängigkeit von die Einflussgröße (P) beeinflussenden äußeren Parametern wie herrschende Umgebungstemperatur (T₁, T₂), anliegende elektrische Spannung (U), Stärke des Magnetfeldes etc. vorgibt.

3. Stellvorrichtung nach Anspruch 1 oder 2, **dadurch gekennzeichnet, dass** der oder die äußeren Parameter (T₁, T₂; U) mittels eines oder mehrerer an die Steuereinheit (3) angeschlossener Sensoren (5, 5') erfasst werden.

4. Stellvorrichtung nach einem der Ansprüche 1 bis 3, **dadurch gekennzeichnet, dass** die Steuereinheit (3) aufgrund der mit den Sensoren (5, 5') erfassten Messwerte einen Wert für die Einflussgröße (P) im Sinne einer Steuerung oder Regelung so vorgibt, dass dieser von den äußeren Parametern (T₁, T₂; U) beeinflusste Wert innerhalb eines vorgegebenen Bereiches (P₁, P₂) liegt.

5. Stellvorrichtung nach einem der Ansprüche 1 bis 4, **dadurch gekennzeichnet, dass** das Formgedächtniselement (2) als durch Wärmezufuhr verformbare Formgedächtnislegierung ausgebildet ist.

6. Stellvorrichtung nach einem der Ansprüche 1 bis 5, **dadurch gekennzeichnet, dass** es sich bei der Einflussgröße (P) um die dem Formgedächtniselement (2) zugeführte elektrische Leistung handelt.

7. Stellvorrichtung nach einem der Ansprüche 1 bis 6, **dadurch gekennzeichnet, dass** die dem Formgedächtniselement (2) zugeführte elektrische Leistung (P) seitens der Steuereinheit (3) je nach am Formgedächtniselement (2) anliegende Spannung (U) als äußerer Parameter modifiziert wird.

8. Stellvorrichtung nach einem der Ansprüche 1 bis 7, **dadurch gekennzeichnet, dass** das Formgedächtniselement (2) wenigstens zwei verschiedene Kristailstrukturen In Abhängigkeit von der Einflussgröße (P) einnimmt.

9. Stellvorrichtung nach einem der Ansprüche 1 bis 8, **dadurch gekennzeichnet, dass die Ausbildung der unterschiedlichen Phasen des** Formgedächtniselementes (2) jeweils zu Eckwerten der Einflussgröße (P) korrespondiert, welche den vorgegebenen Bereich (P₁, P₂) definieren, innerhalb dessen die Steuereinheit (3) den Wert der Einflussgröße (P) hält.

## Claims

1. Control device for a vehicle, e.g. for locking/unlocking vehicle door latches (1), containing an actuator (2) in form of a shape-memorizing element (2) that, depending on at least one influencing variable (P), reversibly changes its shape, and an electronic control unit (3) for acting upon the actuator (2), **characterized in that** the control unit (3) acts upon the shape-memorizing element (2) in such a way that the influencing variable (P) takes on a specified value and that the electrical power (P) applied to the shape-memorizing element (2) from the control unit (3) is modified as external parameter, depending on the prevailing and measured external temperature (T₁, T₂).

2. Control device according to claim 1, **characterized in that** the control unit (3) specifies the value of the influencing variable (P), depending on external parameters affecting the influencing variable (P), such as the prevailing ambient temperature (T₁, T₂), applied electric voltage (U), strength of magnetic field, etc.

3. Control device according to claim 1 or 2, **characterized in that** the external parameter(s) (T₁, T₂; U) are recorded by one or more sensors (5, 5') connected to the control unit (3).

4. Control device according to one of the claims 1 to 3, **characterized in that**, based on the measured values recorded by the sensors (5, 5') the control unit (3) specifies a value for the influencing variable (P) for controlling or regulating, in such a way that this value, influenced by the external parameters (T₁, T₂; U), lies within a specified range (P₁, P₂).

5. Control device according to one of the claims 1 to 4, **characterized in that** the shape-memorizing element (2) is a shape-memorizing element deformable by the application of heat.

6. Control device according to one of the claims 1 to 5, **characterized in that** the influencing variable (P) is the electric power applied to the shape-memorizing element (2).

7. Control device according to one of the claims 1 to 6, **characterized in that** the electric power (P) applied to the shape-memorizing element (2) from the control unit (3) is modified as an external parameter depending on the voltage (U) applied to the shape-memorizing element (2).

8. Control device according to one of the claims 1 to 7, **characterized in that** the shape-memorizing element (2) takes up at least two different crystal structures, depending on the influencing variable (P).

9. Control device according to one of the claims 1 to 8, **characterized in that** the design of the different phases of the shape-memorizing element (2) corresponds in each case with the basic values of the influencing variable (P), defining the specified range (P₁, P₂), in which the control unit (3) holds the value of the influencing variable (P).

## Revendications

1. Dispositif de réglage pour un véhicule, p.ex. pour le verrouillage/déverrouillage de fermetures de portes de véhicule (1) avec un élément mémoire de forme (2) formé en tant qu'actuateur (2) modifiant de façon réversible sa forme en fonction d'au moins un paramètre d'influence (P) et avec une unité de commande (3) électronique pour exciter l'actuateur (2) **caractérisé en ce que** l'unité de commande (3) exciter l'élément mémoire de forme (2) de façon que le paramètre d'influence accepte une valeur donnée et que la puissance électrique envoyée à l'élément mémoire de forme (2) par l'unité de commande (3) est modifiée comme paramètre extérieur en fonction de la température extérieure (T₁, T₂) régnante et mesurée.

2. Dispositif de réglage selon la revendication 1 **caractérisé en ce que** l'unité de commande (3) donne la valeur du paramètre d'influence (P) en fonction de paramètres extérieurs influençant le paramètre d'influence (P) rels que température environnante (T₁, T₂), tension électrique appliquée (U) puissance du champ magnétique, etc.

3. Dispositif de réglage selon la revendication 1 ou 2 **caractérisé en ce que** le ou les paramètres extérieurs (T₁, T₂; U) sont saisis avec un ou plusieurs détecteurs (5, 5') branchés à l'unité de commande (3)

4. Dispositif de réglage selon les revendications 1 à 3 **caractérisé en ce que** en raison des valeurs mesurées saisies par les détecteurs (5, 5'), l'unité de commande (3) fournit une valeur pour le paramètre d'influence (P) dans le sens d'une commande ou d'un réglage de façon que cette valeur influencée par les paramètres extérieurs (T₁, T₂, U) se situe dans la gamme prescrite (P₁, P₂).

5. Dispositif de réglage selon les revendications 1 à 4 **caractérisé en ce que** l'élément mémoire de forme (2) est formé en tant qu'alliage de mémoire de forme déformable par arrivé de chaleur.

6. Dispositif de réglage selon les revendications 1 à 5 **caractérisé en ce que** le paramètre d'influence (P) est la puissance électrique amenée à l'élément mémoire de forme (2).

7. Dispositif de réglage selon les revendications 1 à 6 **caractérisé en ce que** la puissance (P) électrique amenée à l'élément mémoire de forme (2) par l'unité de commande (3) est modifiée comme paramètre extérieur en fonction de la tension (U) appliquée à l'élément mémoire de forme (2).

8. Dispositif de réglage selon les revendications 1 à 7 **caractérisé en ce que** l'élément mémoire de forme (2) prend au moins deux structures cristallines différentes en fonction du paramètre d'influence (P).

9. Dispositif de réglage selon les revendications 1 à 8 **caractérisé en ce que** la formation des différentes phases de l'élément mémoire de forme (2) correspond respectivement aux valeurs clés du paramètre d'influence (P) qui définissent la gamme prescrite (P₁, P₂) dans laquelle l'unité de cmd (3) respecte la valeur du paramètre d'influence (P).
